# EUROPEAN PATENT SPECIFICATION

(11) **EP 0 507 314 B1**
(45) Date of publication and mention of the grant of the patent: **19.11.1997**
(21) Application number: 92105772.5
(22) Date of filing: 03.04.1992
(51) Int. Cl.: H04N 5/445

(54) **Television set with improved remote control unit**
Fernsehgerät mit verbesserter Fernsteuereinheit
Télévision avec dispositif amélioré de commande à distance

(30) Priority: 04.04.1991 IT TO910244
(43) Date of publication of application: 07.10.1992
(73) Proprietor: EDICO S.r.l., I-00197 Roma (IT)
(72) Inventor: Dini, Roberto, I-10098 Rivoli (TO) (IT)
(74) Representative: Eisenführ, Speiser & Partner

(56) References cited:
- EP-A- 390 041
- GB-A- 2 155 714
- JP-A-62 021 397
- US-A- 4 556 904
- US-A- 4 821 102
- PATENT ABSTRACTS OF JAPAN vol. 11, no. 195 (E-518)(2642) 23 June 1987

## Description

The present invention relates to a television set, supplied with a remote control unit, comprising a reduced number of command keys for controlling the functions in a plurality of functional modes, among which a first mode dedicated to controlling the normal television reception, and/or a second mode for controlling the teletext reception and/or a third mode for controlling the functioning of an auxiliary device connected to the television set, and in which one of the keys is provided for activating the display on the television screen of a plurality of useful symbols for controlling the functions.

It is known from EP-A-390 041 a television receiver, supplied with a remote control unit, comprising a reduced number of command keys for controlling the functions in a plurality of functional modes, among which a first mode dedicated to controlling the normal television reception and/or a second mode for controlling the teletext reception and/or a third mode for controlling the functioning of an auxiliary device connected to the television set and in which one of the keys is provided for activating the display on the television screen of a plurality of sequences for controlling the functions, corresponding to said functional modes and that each sequence provides for the control of all the functions of the selected operating mode, wherein the sequences comprise symbolic figures, representative of the function to be performed.

As is known almost every, so as not to say all, television sets are supplied with remote control units, with a plurality of keys for providing the necessary commands for the functioning of the set.

As television sets have become increasingly complicated machines, the number of commands, and therefore the keys, have notably increased.

Nowadays, remote control units for television sets contain, apart from the keys for the actual functioning of the television, also other keys, such as those necessary for the teletext functions, and often those for another associated device, such as a video tape recorder, and so on.

It is not difficult to find remote control units with 60 or 70 keys.

It is understandable that such a number of keys can cause confusion for the user.

There have been various ways of trying to improve the situation, such as giving a double function to the keys, or by hiding a part under a cover, and so on, but these means do not solve the problem, in fact they make the use even more troublesome.

There is known a television set supplied with a remote control unit with around twenty keys, that allows for controlling the normal functions, and those of teletext; with suitable manoeuvres it is in fact possible to display on the television screen writing that can be selected and modified for effecting the various regulations; this device however has serious inconveniences such as:
- the writing covers the major part of the image making it useless, for which as an example adjusting the brightness, the vision is lost for the time necessary for carrying out the operation
- there is more than one menu for the same functional mode (for instance the adjusting of the tuning is in a different menu from that for adjusting the colour or brightness);
- in the teletext mode the keys that normally adjust the volume are used for changing page, so as that it is not easy to lower the volume if it is too high or to turn it up if it is too low.

The present invention has the aim of indicating the possibility of realising a television that proposes a solution to the cited inconveniences.

In allowing for such aims, the present invention has as its object a television set, supplied with a remote control unit, comprising a reduced number of command keys for controlling the functions in a plurality of functional modes, among which a first mode dedicated to controlling the normal television reception, and/or a second mode for controlling the teletext reception, and/or a third mode for controlling the functioning of an auxiliary device connected to the television set, and in which one of the keys is provided for activating the display on the television screen of a plurality of useful symbols for controlling the functions, characterised by the fact that the symbols are represented by symbolic complex figures united in a plurality sequences corresponding to said functional modes and that each sequence is displayed according to the functional mode in use and said symbolic complex figures are displayed in such a way so as not to substantially disturb the viewing of the image reproduced on the television screen, even though being clearly visible, and that they comprise all the symbols necessary for the control of all the provided functions of the selected operating mode.

The present invention is characterised by the features of claim 1.

Further aims and advantages will become clear from the following detailed description and annexed drawings, supplied as a non-limiting example, wherein:
- figure 1 represents the screen of a television set according to the invention in a first functional mode (TV);
- figure 2 represents the inferior part of the television screen of figure 1 in a second functional mode (TXT);
- figure 3 represents the inferior part of the television screen of figure 1 in a third functional mode (VTR);
- figure 4 represents the transmitter of the remote control unit of the television set of figure 1;
- figure 5 schematically represents a significant part of the logic circuit of the control unit of the television set in figure 1.

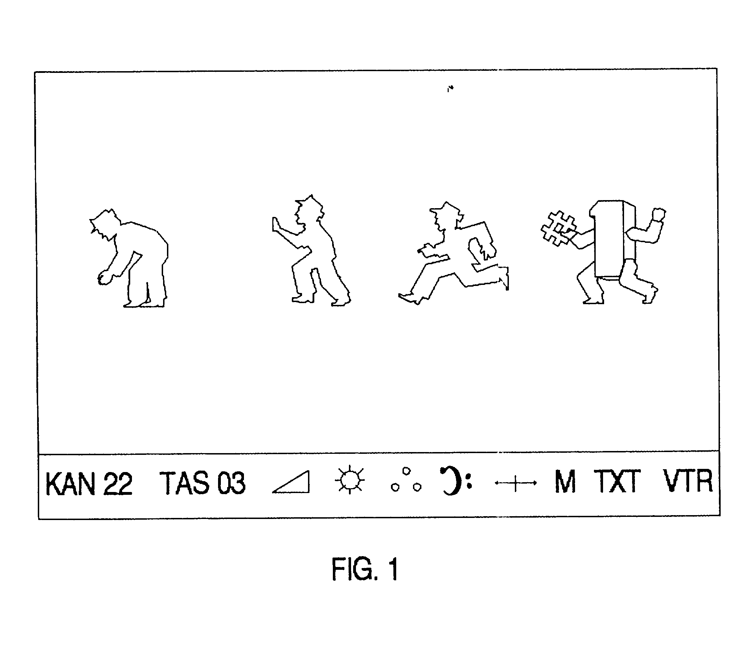

Figure 1 represents the screen of a television set according to the invention in a first functional mode, i.e. the normal television reception. As is seen, in the inferior part of the screen a black horizontal strip is visible, in which a series of symbols are displayed, precisely, from left to right.
- the sign KAN followed by a two digit number (22); such sign indicates that the television is receiving the television channel 22;
- the sign TAS followed by a two figure number; such sign indicates that the channel that the television is receiving is being stored in memory 03;
- a series of symbolic complex figures;
- the triangular symbol, having a left handed point, normally used for indicating the volume control;
- the symbol of a shining sun, normally used for indicating the brightness control;
- the symbol representing three small circles taking the form of a triangle, normally used for the colour control;
- the symbol of a musical key, normally used for indicating the tone control;
- the symbol represented by two externally facing arrows, normally used for the fine tuning control;
- the letter M, indicating the memorising operation;
- the TXT sign, normally used for indicating the teletext mode;
- the VTR sign, normally used for indicating the video tape recorder mode.

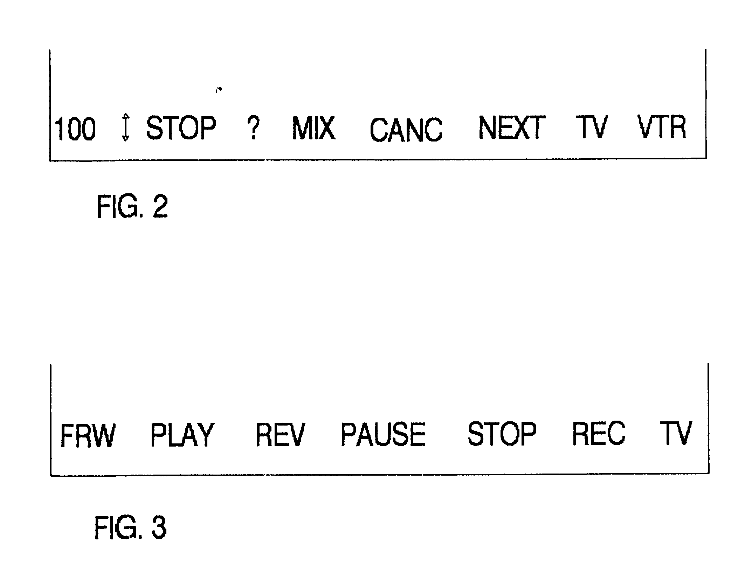

Figure 2 represents the inferior part of the television screen of figure 1 in a second functional mode, more precisely when the teletext mode has been activated.

As can be seen from the symbolic complex figures there are several being different from those previously mentioned; in particular, from left to right, there are visible:
- the sign 100, that indicates page 100, containing the teletext general index;
- the symbol formed of two arrows pointing upwards and downwards, normally used for indicating the teletext "double size" function;
- the STOP sign, that indicates the relative teletext command;
- the question mark symbol, normally used for indicating the teletext "reveal" function;
- the MIX sign, that indicates the relative teletext command;
- the CANC sign, that indicates the teletext CANCEL command;
- the NEXT sign, that indicates the relative teletext command;
- the sign TV, normally used for indicating the return to the normal television reception from the teletext function;
- the VTR sign, normally used for indicating the video tape recorder mode.

Figure 3 represents the inferior part of the television screen of figure 1 in a third functional mode more precisely when the video tape recorder function has been activated.

As can be seen the symbolic complex figures are different; in particular, from left to right, there are visible:
- the sign FRW, that indicates the FORWARD command of the video tape recorder;
- the sign PLAY, that indicates the relative command of the video tape recorder;
- the sign REV, that indicates the REWIND command of the video tape recorder;
- the PAUSE sign, that indicates the relative command of the video tape recorder;
- the STOP sign, that indicates the relative command of the video tape recorder;
- the REC sign, that indicates the RECORD command of the video tape recorder;
- the TV sign, used for indicating the return from the video tape recorder function to the normal television reception.

In a preferred version of the invention the described symbolic complex figures are obtained with the use of a character and graphic symbol generator incorporated in the teletext decoder, combined to the receiver; those represented in the figure are naturally only examples.

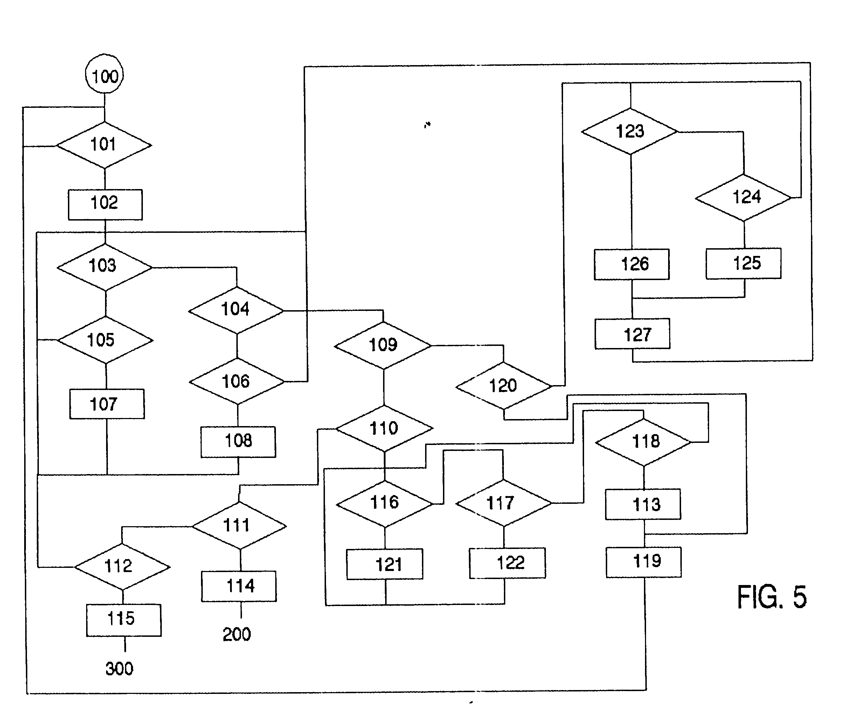

Figure 5 schematically represents a significant part of the logic circuit of the control unit of the television set in figure 1; the transmitter is supplied with a key board comprising 19 keys, and more precisely:
- a rectangular key (52) distinguished with the sign "DISP", which will be mentioned later;
- a rectangular key (53) distinguished with the sign "MODE", which will be mentioned later;
- two keys (50, 51) distinguished with arrow symbols, with their points arranged respectively to the left (50) and to the right (51); these have the purpose of selecting the symbols on the screen; these will be mentioned later;
- another two keys "+" and "-", that have the purpose of varying the levels, be it higher or lower; these will be mentioned later;
- ten round keys distinguished with numbers ranging from 0 to 9, that have the purpose of forming numbers (for the channels or programmes, for the teletext pages, etc.) and for exiting the stand by condition;
- a round key distinguished with a symbol constituted by two arrows with their points pointing towards each other, normally used for indicating the function of restoring to normal the adjustments (granny key);
- two rectangular keys, respectively distinguished with the symbol of a crossed loud speaker (sound removal) and the international symbol representing the "stand by" setting.

Figure 5 schematically represents a significant part of the logic circuit of the central control unit 2 of the television set in figure 1, that allows for the realisation of what has been described above.

Such circuit can indifferently be realised with the wired logic system or with the programmed logic system, i.e. utilising a microprocessor; said second system is generally less expensive, as televisions already normally contain one or more microprocessors.

Block 100 is the starting block of the operations, for example after the television has been switched on; control then passes from block 100 to block 101.

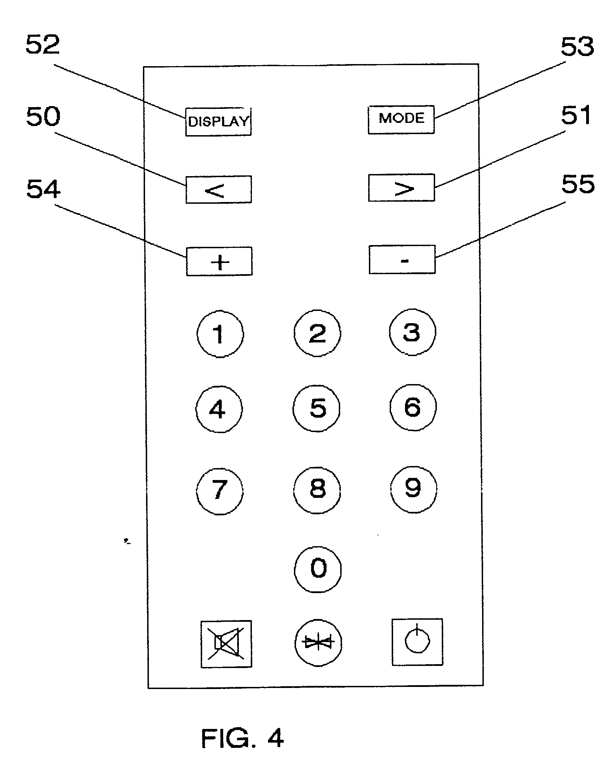

Block 101 is a control block; it controls whether the user has depressed, on the device in figure 4, the "DISP" key; in the affirmative case control passes to block 102; in the negative case control returns to block 101 (in all the control blocks the inferior output is the YES output; the lateral output is the NO output).

Block 102 provides for:
- displaying on the inferior part of the screen the series of symbols represented in figure 1;
- making the first symbol on the left flash, in the example the sign KAN 22;
- passing control to the successive block 103.

Block 103 is a control block; it controls whether the user has depressed, on the device of figure 4, the key 51 (right handed arrow); in the affirmative case control passes to block 105; in the negative case control passes to block 104.

Block 104 is a control block; it controls whether the user has depressed, on the device of figure 4, the key 50 (left handed arrow); in the affirmative case control passes to block 106; in the negative case control passes to block 109.

Block 105 is a control block; it controls whether the flashing symbol is not the last on the left; in the affirmative case control passes to block 108; in the negative case control returns to block 103.

Block 107 provides for:
- making the symbol that was flashing stop;
- making the adjacent symbol on the right flash (in the example the sign TAS 03);
- passing the control once again to block 103.

Block 108 provides for:
- making the symbol that was flashing stop;
- making the adjacent symbol on the left flash;
- passing the control once again to block 103.

Block 109 is a control block; it controls whether the user has depressed, on the device of figure 4, the "MODE" key; in the affirmative case control passes to block 110; in the negative case control passes to block 120.

Block 110 is a control block; it controls whether the symbol flashing is the symbol "M"; in the affirmative case control passes to block 116; in the negative case control passes to block 111.

Block 111 is a control block; it controls whether the symbol flashing is the "TXT" symbol; in the affirmative case control passes to block 114; in the negative case control passes to block 112.

Block 112 is a control block; it controls whether the symbol flashing is the "VTR" symbol; in the affirmative case control passes to block 115; in the negative case control passes to block 103.

Block 113 provides for:
- memorising the adjustments (channel number, levels, tuning, etc.) in the state in which they are found, associating them to the memory indicated on the display (TAS 03);
- passing control to block 119.

Block 114 provides for:
- removing the black strip along the inferior part of the image;
- activating the teletext function, therefore substituting the television image received with page 100 of teletext;
- passing control to block 200.

Block 115 provides for:
- substituting the series of blocks on the inferior part of the image with those represented in figure 2;
- activating the video tape recorder function;
- passing control to block 300.

Block 116 is a control block; it controls whether the user has depressed, on the device of figure 4, the "+" key; in the affirmative case control passes to block 121; in the negative case control passes to block 117.

Block 117 is a control block; it controls whether the user has depressed the "-" key; in the affirmative case control passes to block 122; in the negative case control passes to block 118.

Block 118 is a control block; it controls whether the user has depressed, on the device of figure 4, the "MODE" key; in the affirmative case control passes to block 113; in the negative case control returns to block 116.

Block 119 provides for:
- removing the black strip and the symbols on the inferior part of the image, re-establishing it in its entirety;
- passing control once again to block 101.

Block 120 is a control block; it controls whether the user has depressed, on the device in figure 4, the "DISP" key; in the affirmative case control passes to block 119; in the negative case control passes to block 123.

Block 121 provides for:
- increasing by a single unit the key number indicated on the display;
- passing control once again to block 116.

Block 122 provides for:
- decreasing by a single unit the key number indicated on the display;
- passing control once again to block 116.

Block 123 is a control block; it controls whether the user has depressed, on the device of figure 4, the "+" key; in the affirmative case control passes to block 126; in the negative case control passes to block 124.

Block 124 is a control block; it controls whether the user has depressed, on the device of figure 4, the "-" key; in the affirmative case control passes to block 127; in the negative case control returns to block 123.

Block 125 provides for:
- decreasing by one unit the symbol that is flashing on the display; for example if we consider the KAN symbol the channel number indicated on the display is decreased, thus becoming 21;
- passing control to block 127.

Block 126 provides for:
- increasing by one unit the symbol that is flashing on the display; for example if we consider the KAN symbol the channel number indicated on the display is increased, thus becoming 23;
- passing control to block 127.

Block 127 provides for:
- activating the effective variation of the modified level; as in the case given as an example the tuning of the television to the channel whose number is indicated on the display is activated;
- passing control once again to block 102.

For simplicity blocks 200 and 300 are not represented in the figure; they are the initial blocks of the teletext and video tape recorder functions, each of which being analogous with the television functions described; in the teletext and video tape recorder functions the relative level adjustment blocks are missing; in fact they are only functions to be activated by the key "MODE" " and not levels to be adjusted, as in the TV function.

The functioning of the described television set is the following:

The user, upon depressing the DISP key causes the appearance, on the inferior part of the screen, without any substantial disturbances to the viewing, the series of symbolic complex figures represented in figure 1. The first symbol to the left (KAN) flashes; the user can, by means of the arrow keys, select the desired symbol; the symbol selected is indicated by flashing. If the selected symbol is a functional symbol (M, TXT, VTR), the user can, by depressing the MODE key, activate the relative function (memorising, teletext, video tape recorder); if the selected symbol is an adjusting symbol, the user can, after having depressed the MODE key, vary the level, higher or lower, by means of the keys distinguished with "+" and "-"; then he can, by depressing the DISP key once again, exit the loop adjustment, or select another symbol, among which, if desired, the "M" symbol for memorising the varied adjustments.

It is also possible to directly select a channel with its number.

When the series of symbolic complex figures are not displayed, whilst in the teletext mode, the "+" and "-" keys change the volume level.

In teletext, as is seen in figure 2, the typical teletext functions are possible, with the same system; the symbol NEXT can be selected for example (by depressing the DISP key and then the right handed arrow key 6 times and finally MODE).

Similarly the video tape recorder function allows the selection and activation of all the typical commands of a video tape recorder.

All with a remote control unit with only 19 keys; the user is guided in the choice of desired commands; in a clear form, given the large dimensions of the screen; the viewing is not substantially disturbed. The characteristics of the described television set result in being clear from the present description and annexed drawings.

From the present description the advantages of the television set object of the present invention also result in being clear.

It is supposed that numerous variants are possible by the man of the art to the television set described as an example, without however departing from the novelty principles inherent in the invention.

For example it would even be possible to eliminate the ten numbered keys from the remote control unit, entrusting the output of the stand by mode to the MODE key, and with only a slight inconvenience in the use of the teletext; in this function a symbol PAG could be inserted, to increase or decrease by means of the usual keys "+" and "-".

The symbolic complex figures indicated can naturally be substituted with different ones, for example with designs representing the functions (a design representing a video tape recorder instead of the sign VTR and so on); their number could be increased or decreased; their collocation in the displayed sequence could be varied; and so on.

## Claims

1. Television receiver, supplied with a remote control unit comprising numerical keys and a reduced number of command keys for controlling functions in a plurality of functional modes among which a first operating mode dedicated to controlling the normal television reception (TV) and/or a second operating mode for controlling the teletext reception (TXT) and/or a third operating mode for controlling the functionity of an auxiliary device (VTR) connected to the television receiver,
the television receiver comprising a logic control unit controlling a character and symbol generator for generating an on-screen display,
whereby one of the command keys (DISP) of the remote control unit is provided for activation the display on the television screen of at least one sequence for controlling said functions, corresponding to said functional modes and that each sequence provides for the control of all said functions of the selected operating mode,
the sequence consisting of alpha-numerical and/or graphic symbols representative of the function to be performed and said symbol generator being adapted to display said sequence on a part of the screen in such a way so as not to substantially disturb the viewing of the image reproduced on the television screen, even though being clearly visible,
characterized in that
the television receiver is further provided with means (50, 51) for moving an indicator on said symbols and means (53) adapted for activating the operating mode (TV, TXT, BTR) corresponding to the symbol (TV, TXT, VTR) selected with said indicator on said part of the screen.

2. Television receiver according to claim 1, characterised by the fact that said symbols also provide those (TV, TXT, VTR) for selecting a functional mode being different from that in use.

3. Television receiver according to claim 1, characterised by the fact that means (52, 102) for displaying a series of symbols each corresponding to a functional mode (TV, TXT, VTR), means (107, 108) for moving an indicator on one of the selected said symbols, and means (53, 109-125) for activating the function corresponding to the selected symbol are provided.

4. Television receiver according to claim 1, characterised by the fact that said series of symbols are displayed on the television screen, in the lower zone or on the higher zone of the screen.

5. Television receiver according to claim 3, characterised by the fact that said means for moving the indicator comprise two keys (50, 51) on said remote control unit, distinguished with two arrows, one of which having its point to the left and the other having its point to the right.

6. Television receiver according to claim 3, characterised by the fact that said means for displaying said series of symbols comprise a key (52) on said remote control unit.

7. Television receiver according to claim 3, characterised by the fact that said means for activating the function corresponding to the selected symbol comprise a key (53) on said remote control unit.

8. Television receiver according to claims 3 to 7, characterised by the fact that some of the functions that can be activated consist of a gradual step variation, that could be a level (volume, brightness, colour) or a channel or program number.

9. Television receiver according to claim 8, characterised by the fact that said variation is carried out by means of utilising two keys (54, 55) on said remote control unit, distinguished with the symbols "+" and "-".

10. Television receiver according to the previous claims 3 to 7, characterised by the fact that among the functions that can be activated the relative functions are comprised for the teletext functioning .

11. Television receiver according to the previous claims 3 to 7, characterised by the fact that among the functions that can be activated the relative functions are comprised for the functioning of an auxiliary device connected to the television receiver.

12. Television receiver according to claim 3, characterised by the fact that said auxiliary device is a video tape recorder.

13. Television receiver according to the previous claims 3 to 13, characterised by the fact that said indicator is realised by making the selected symbol flash.

14. Television receiver according to any of the previous claims, characterised by the fact that said command keys are less than 20 in number.

15. Television receiver according to any of the previous claims, characterised by the fact that it comprises a logic control unit.

16. Television receiver according to claim 16, characterised by the fact that said control unit is realised with the wired logic system.

17. Television receiver according to claim 16, characterised by the fact that said control unit comprises a microprocessor and is realised with the programmed logic system.

18. Television receiver according to claim 3, characterised by the fact that said means for viewing a series of symbols comprises a character and symbol generator, and that said generator is incorporated in a control circuit of the teletext function.

19. Television receiver according to any of the previous claims, characterised by the fact that said command keys comprise two keys (54, 55) on said remote control unit, for the volume control when said symbols are not displayed.

20. Television receiver according to claim 20, characterised by the fact that said two keys (54, 55) have the purpose of controlling the volume in the teletext mode (TXT) even when said symbols are displayed.

## Patentansprüche

1. Fernsehempfänger, welcher mit einer Fernsteuerung ausgestattet ist, die numerische Tasten und eine verringerte Anzahl von Befehlstasten zum Steuern von Funktionen in mehreren Funktions-Modi umfaßt, in welchen ein erster Betriebsmodus vorgesehen ist zum Steuern des normalen Fernsehempfangs (TV) und/oder ein zweiter Betriebsmodus zum Steuern des Teletext-Empfangs (TXT) und/oder ein dritter Betriebsmodus zum Steuern der Funktionen eines Zusatzgerätes (VTR), welches an den Fernsehempfänger angeschlossen ist,
wobei der Fernsehempfänger eine Logik-Steuerungseinheit umfaßt, welche einen Zeichen- und Symbol-Generator zum Erzeugen eines On-Screen-Displays umfaßt, wobei eine der Befehlstasten (DISP) der Fernsteuerung zur Aktivierung der Anzeige auf dem Fernsehbildschirm für wenigstens eine Sequenz zum Steuern der Funktionen vorgesehen ist, entsprechend den Funktions-Modi, und daß jede Sequenz für die Steuerung sämtlicher Funktionen des selektierten Betriebsmodus vorgesehen ist,
wobei die aus alphanumerischen und/oder graphischen Symbolen bestehende Sequenz, welche die auszuführende Funktion darstellen, und der Symbolgenerator derart ausgebildet sind, daß sie die Sequenz auf einem Teil des Bildschirms in einer solchen Weise anzeigen, daß die Betrachtung des auf dem Fernsehbildschirm wiedergegebenen Bildes nicht wesentlich gestört wird, obwohl sie deutlich sichtbar ist,
dadurch gekennzeichnet, daß der Fernsehempfänger weiterhin mit einer Einrichtung (50, 51) zum Bewegen eines Zeigers auf die Symbole und einer Einrichtung (53) ausgestattet ist, welche zum Aktivieren des Betriebsmodus (TV, TXT, VTR) entsprechend dem mit dem Zeiger auf dem Teil des Bildschirms selektierten Symbol (TV, TXT, VTR) ausgebildet ist.

2. Fernsehempfänger nach Anspruch 1,
dadurch gekennzeichnet, daß die Symbole ebenfalls diejenigen (TV, TXT, VTR) zum Selektieren eines Funktionsmodus bereitstellen, die sich von dem genutzen unterscheiden.

3. Fernsehempfänger nach Anspruch 1,
gekennzeichnet durch eine Einrichtung (52, 102) zum Anzeigen einer Reihe von Symbolen, von denen jedes einem Funktionsmodus (TV, TXT, VTR) entspricht, eine Einrichtung (107, 108) zum Bewegen eines Zeigers auf eines der selektierten der Symbole und eine Einrichtung (53, 109-125) zum Aktivieren der Funktion entsprechend dem selektierten Symbol.

4. Fernsehempfänger nach Anspruch 1,
dadurch gekennzeichnet, daß die Symbolreihe auf dem Fernsehbildschirn in dem unteren Bereich oder in dem höheren Bereich des Bildschirms angezeigt wird.

5. Fernsehempfänger nach Anspruch 3,
dadurch gekennzeichnet, daß die Einrichtung zum Bewegen des Zeigers zwei Tasten (50, 51) auf der Fernsteuerung umfaßt, welche sich durch zwei Pfeile unterscheiden, von denen einer seine Spitze nach links und der andere seine Spitze nach rechts aufweist.

6. Fernsehempfänger nach Anspruch 3,
dadurch gekennzeichnet, daß die Einrichtung zum Anzeigen einer Symbolreihe eine Taste (52) auf der Fernsteuerung umfaßt.

7. Fernsehempfänger nach Anspruch 3,
dadurch gekennzeichnet, daß die Einrichtung zum Aktivieren der Funktion entsprechend dem selektierten Symbol eine Taste (53) auf der Fernsteuerung umfaßt.

8. Fernsehempfänger nach den Ansprüchen 3 bis 7,
dadurch gekennzeichnet, daß einige der aktivierbaren Funktionen aus einer allmählichen Schrittveränderung bestehen, die ein Pegel (Lautstärke, Helligkeit, Farbe) oder ein Kanal oder eine Programmnummer sein können.

9. Fernsehempfänger nach Anspruch 8,
dadurch gekennnzeichnet, daß die Variation durch die Verwendung zweier Tasten (54, 55) auf der Fernsteuerung ausgeführt wird, welche durch die Symbole "+" und "-" unterschieden sind.

10. Fernsehempfänger nach einem der vorstehenden Ansprüche 3 bis 7,
dadurch gekennzeichnet, daß aus diesen Funktionen diejenige aktivierbar ist, deren zugehörige Funktionen die Teletext-Funktionen umfassen.

11. Fernsehempfänger nach einem der vorstehenden Ansprüche 3 bis 7,
dadurch gekennzeichnet, daß aus diesen Funktionen diejenige aktivierbar ist, deren zugehörige Funktionen die Funktionen eines an den Fernsehempfänger angeschlossenen Zusatzgerätes umfassen.

12. Fernsehempfänger nach Anspruch 3,
dadurch gekennzeichnet, daß das Zusatzgerät ein Videorekorder ist.

13. Fernsehempfänger nach den vorstehenden Ansprüchen 3 bis 12,
dadurch gekennzeichnet, daß die Anzeige dadurch verwirklicht wird, daß das selektierte Symbol blinkt.

14. Fernsehempfänger nach einem der vorstehenden Ansprüche,
dadurch gekennzeichnet, daß die Anzahl der Befehlstasten kleiner als 20 ist.

15. Fernsehempfänger nach einem der vorstehenden Ansprüche,
dadurch gekennzeichnet, daß er eine logische Steuerungseinheit umfaßt.

16. Fernsehempfänger nach Anspruch 15,
dadurch gekennzeichnet, daß die Steuerungseinheit mit dem verdrahteten Logiksystem verwirklicht ist.

17. Fernsehempfänger nach Anspruch 16,
dadurch gekennzeichnet, daß die Steuerungseinheit einen Mikroprozessor umfaßt und mit dem programmierten Logiksystem verwirklicht ist.

18. Fernsehempfänger nach Anspruch 3,
dadurch gekennzeichnet, daß die Einrichtung zum Betrachten einer Symbolreihe einen Zeichen- und Symbol-Generator umfaßt und daß der Generator in einer Steuerungsschaltung der Teletext-Funktion enthalten ist.

19. Fernsehempfänger nach einem der vorstehenden Ansprüche,
dadurch gekennzeichnet, daß die Befehlstasten zwei Tasten (54, 55) auf der Fernsteuerung für die Lautstärkeeinstellung, wenn die Symbole nicht angezeigt werden, umfaßt.

20. Fernsehempfänger nach Anspruch 19,
dadurch gekennzeichnet, daß die zwei Tasten (54, 55) die Aufgabe haben, die Lautstärke in dem Teletext-Modus (TXT) zu steuern, auch wenn die Symbole angezeigt werden.

## Revendications

1. Récepteur de télévision pourvu d'une unité de commande à distance comprenant des touches numériques et un nombre réduit de touches de commande destinées à commander des fonctions dans une pluralité de modes fonctionnels parmi lesquels un premier mode de fonctionnement dédié à la commande de la réception de télévision normale (TV) et/ou un deuxième mode de fonctionnement pour commander la réception de télétexte (TXT) et/ou un troisième mode de fonctionnement pour commander les fonctions d'un dispositif auxiliaire (VTR) connecté au récepteur de télévision,
le récepteur de télévision comprenant une unité logique de commande commandant un générateur de caractères et de symboles pour générer un affichage sur écran,
tel que l'une des touches de commande (DISP) de l'unité de commande à distance est prévue pour l'activation de l'affichage sur l'écran de télévision d'au moins une séquence pour commander lesdites fonctions, correspondant auxdits modes fonctionnels, et que chaquc séquence permet la commande de toutes lesdires fonctions du mode de fonctionnement choisi,
la séquence étant constituée de symboles alphanumériques et/ou graphiques représentant la fonction à exécuter, et ledit générateur de symboles étant prévu pour afficher ladite séquence sur une partie de l'écran, d'une façon telle à ne pas sensiblement perturber l'observation de l'image reproduite sur l'écran de télévision, même en étant nettement visible,
caractérisé en ce que
le récepteur de télévision est pourvu en outre de moyens (50, 51) pour déplacer un indicateur sur lesdits symboles, et de moyens (53) prévus pour activer le mode de fonctionnement (TV, TXT, VTR) correspondant au symbole (TV, TXT, VTR) choisi avec ledit indicateur sur ladite partie de l'écran.

2. Récepteur de télévision selon la revendication 1, caractérisé en ce que lesdits symboles comportent également ceux (TV, TXT, VTR) qui sont destinés à choisir un mode de fonctionnement différent de celui qui est utilisé.

3. Récepteur de télévision selon la revendication 1, caractérisé en ce que des moyens (52, 102) destinés à afficher une série de symboles correspondant chacun à un mode de fonctionnement (TV, TXT, VTR), des moyens (107, 108) destinés à déplacer un indicateur sur l'un desdits symboles choisis et des moyens (53, 109-125) destinés à activer la fonction correspondant au symbole choisi, sont fournis.

4. Récepteur de télévision selon la revendication 1, caractérisé en ce que ladite série de symboles sont affichés sur l'écran de télévision dans la zone inférieure ou sur la zone supérieure de l'écran.

5. Récepteur de télévision selon la revendication 3, caractérisé en ce que lesdits moyens pour déplacer l'indicateur comprennent deux touches (50, 51) sur ladite unité de commande à distance, qui se distinguent par deux flèches, l'une d'entre elles ayant sa pointe vers la gauche et l'autre ayant sa pointe vers la droite.

6. Récepteur de télévision selon la revendication 3, caractérisé en ce que lesdits moyens pour afficher ladite série de symboles comprennent une touche (52) sur ladite unité de commande à distance.

7. Récepteur de télévision selon la revendication 3, caractérisé en ce quc lesdits moyens pour activer la fonction correspondant au symbole choisi comprennent une touche (53) sur ladite unité de commande à distance.

8. Récepteur de télévision selon les revendications 3 à 7, caractérisé en ce que certaines des fonctions pouvant être activées sont constituées d'une variation progressive par pas, pouvant être un niveau (volume, luminosité, contraste) ou un canal ou un numéro de programme.

9. Récepteur de télévision selon la revendication 8, caractérisé en ce que ladite variation est effectuée au moyen de l'utilisation de deux touches (54, 55) sur ladite unité de commande à distance, qui se distinguent par les symboles "+" et "-".

10. Récepteur de télévision selon les revendications 3 à 7, caractérisé en ce que, parmi les fonctions pouvant être activées, les fonctions relatives sont comprises pour le fonctionnement du télétexte.

11. Récepteur de télévision selon les revendications 3 à 7, caractérisé en ce que, parmi les fonctions pouvant être activées, les fonctions relatives sont comprises pour le fonctionnement d'un dispositif auxiliaire connecté au récepteur de télévision.

12. Récepteur de télévision selon la revendication 3, caractérisé en ce que ledit dispositif auxiliaire est un magnétoscope.

13. Récepteur de télévision selon les revendications précédentes 3 à 7, caractérisé en ce que ledit indicateur est réalisé en faisant clignoter le symbole choisi.

14. Récepteur de télévision selon l'une quelconque des revendications précédentes, caractérisé en ce que lesdites touches de commande sont en nombre inférieur à 20.

15. Récepteur de télévision selon l'une quelconque des revendications précédentes, caractérisé en ce qu'il comprend une unité logique de commande.

16. Récepteur de télévision selon la revendication 15, caractérisé en ce que ladite unité de commande est réalisée avec le système de logique câblée.

17. Récepteur de télévision selon la revendication 15, caractérisé en ce que ladite unité de commande comprend un microprocesseur, et est réalisée avec le système de logique programmée.

18. Récepteur de télévision selon la revendication 3, caractérisé en ce que lesdits moyens pour observer une série de symboles comprennent un générateur de caractères et de symboles, et en ce que ledit générateur est incorporé dans un circuit de commande de la fonction de télétexte.

19. Récepteur de télévision selon l'une quelconque des revendications précédentes, caractérisé en ce que lesdites touches de commande comprennent deux touches (54, 55) sur ladite unité de commande à distance, pour la commande de volume lorsque lesdits symboles ne sont pas affichés.

20. Récepteur de télévision selon la revendication 19, caractérisé en ce que lesdites deux touches (54, 55) ont pour but de commander le volume dans le mode télétexte (TXT), même lorsque lesdits symboles sont affichés.
